Europäisches Patentamt

European Patent Office

Office européen des brevets

(19)

(11) Numéro de publication: **0 283 340**
A1

# (12) DEMANDE DE BREVET EUROPEEN

(21) Numéro de dépôt: 88400339.3

(22) Date de dépôt: 16.02.88

(51) Int. Cl.⁴: **F 01 P 3/20**
F 25 B 49/00

(30) Priorité: 18.02.87 FR 8702102

(43) Date de publication de la demande:
21.09.88 Bulletin 88/38

(84) Etats contractants désignés: **DE ES GB IT**

(71) Demandeur: **VALEO**
**64 Avenue de la Grande Armée**
**F-75017 Paris (FR)**

(72) Inventeur: **Palier, Pierre**
**10, rue André Derain**
**F-78280 Guyancourt (FR)**

**Simonin, Michel**
**11, rue Jean Monnet**
**F-78180 Montigny-Le-Bretonneux (FR)**

(54) Circuit de refroidissement auxiliaire pour véhicule automobile.

(57) Circuit de refroidissement auxiliaire comprenant au moins deux échangeurs de chaleur primaires (8, 9, 10) dans lesquels de la chaleur est transférée de divers fluides primaires à un fluide secondaire, et un échangeur de chaleur secondaire (11) dans lequel de la chaleur est transférée du fluide secondaire à l'atmosphère. Les puissances thermiques reçues par les différents fluides primaires (huile de moteur, air de suralimentation, fluide de climatisation) varient selon les conditions de fonctionnement du véhicule, et la valeur maximale de leur somme, qui définit la taille de l'échangeur secondaire, est inférieure à la somme de leurs valeurs maximales.

Le circuit selon l'invention peut être lié ou non au circuit de refroidissement principal (2-6) du moteur d'entraînement (1) du véhicule.

FIG. 2

EP 0 283 340 A1

**Description**

Circuit de refroidissement auxiliaire pour véhicule automobile.

L'invention concerne un circuit de refroidissement pour véhicule automobile comprenant au moins un premier échangeur de chaleur primaire pour transférer de la chaleur d'un premier fluide primaire, qui reçoit une puissance thermique variant en fonction des conditions de fonctionnement du véhicule, à un fluide secondaire, un échangeur de chaleur secondaire pour transférer de la chaleur du fluide secondaire à l'atmosphère, et des moyens de circulation pour faire circuler le fluide secondaire entre le premier échangeur primaire et l'échangeur secondaire.

Un tel circuit de refroidissement, qu'on appellera ci-après circuit auxiliaire, se distingue du circuit de refroidissement principal du véhicule, auquel il s'ajoute généralement, et dans lequel un fluide caloporteur unique circule dans le bloc moteur du véhicule et dans un échangeur de chaleur principal ou radiateur dans lequel il cède de la chaleur à l'atmosphère.

On connaît par exemple des circuits de refroidissement auxiliaires tels que définis ci-dessus, destinés à refroidir de l'air de suralimentation sortant d'un turbocompresseur.

Le but de l'invention est de permettre à un tel circuit de refroidissement de remplir différentes fonctions, tout en limitant la capacité d'échange thermique et par conséquent la taille de l'échangeur secondaire.

Ce résultat est obtenu, selon l'invention, en ce que le circuit comprend en outre au moins un second échangeur de chaleur primaire pour transférer de la chaleur d'un second fluide primaire, qui reçoit une puissance thermique variant en fonction des conditions de fonctionnement du véhicule, au fluide secondaire, les moyens de circulation faisant également circuler le fluide secondaire entre le second échangeur primaire et l'échangeur secondaire, les valeurs maximales respectives des puissances thermiques reçues par les premier et second fluides primaires étant atteintes pour des conditions de fonctionnement différentes.

Avantageusement, le circuit selon l'invention comprend au moins trois échangeurs de chaleur primaires associés chacun à un fluide primaire et reliés à l'échangeur de chaleur secondaire par les moyens de circulation.

Selon une caractéristique importante de l'invention, la capacité d'échange thermique de l'échangeur secondaire est calculée pour évacuer une puissance thermique inférieure à la somme des puissances maximales reçues par les fluides primaires associés à l'ensemble des échangeurs primaires du circuit.

Les moyens de circulation comprennent notamment une pompe.

Selon un mode de mise en oeuvre de l'invention, le fluide secondaire est un liquide.

Dans ce cas, le circuit selon l'invention peut être relié au circuit principal de refroidissement du moteur d'entraînement du véhicule et utiliser comme liquide secondaire le liquide de refroidissement du circuit principal, la pompe, l'échangeur secondaire et les échangeurs primaires étant montés en parallèle avec le radiateur du circuit principal.

La liaison entre le circuit auxiliaire et le circuit principal peut être soit directe, soit réalisée à travers des vannes commandées, le circuit auxiliaire comportant dans ce dernier cas une branche directe entre la sortie des échangeurs primaires et les entrées de la pompe.

Selon un autre mode de réalisation, le fluide secondaire passe de l'état liquide à l'état gazeux dans les échangeurs primaires et de l'état gazeux à l'état liquide dans l'échangeur secondaire.

D'autres caractéristiques et avantages de l'invention ressortiront de la description donnée ci-après de quelques exemples de réalisation, et des dessins annexés, dans lesquels :
- la figure 1 représente schématiquement un circuit auxiliaire selon l'invention lié au circuit principal de refroidissement du moteur d'un véhicule automobile;
- la figure 2 est une vue analogue à la figure 1, relative à une variante;
- la figure 3 représente schématiquement un autre circuit auxiliaire selon l'invention.

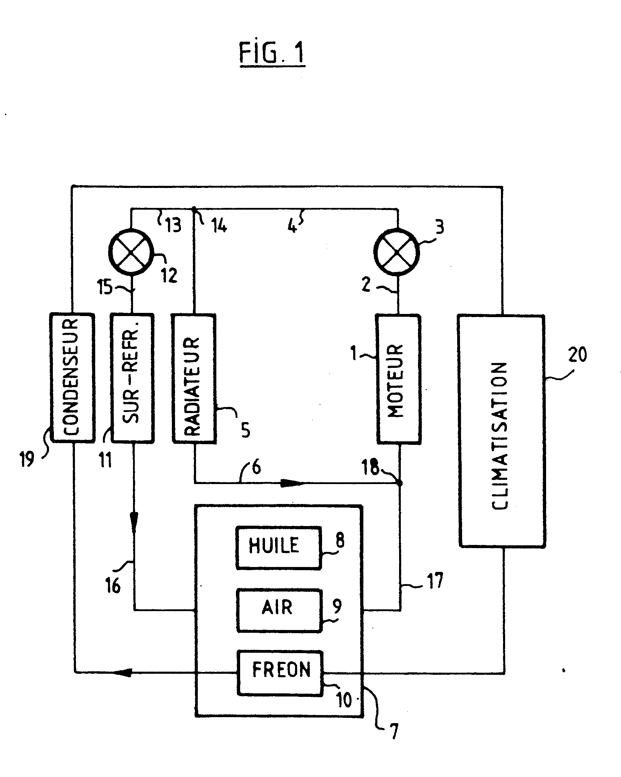

Le schéma de la figure 1 illustre le circuit de refroidissement principal du moteur d'entraînement d'un véhicule automobile. Ce circuit comprend une conduite 2 conduisant un liquide de refroidissement du moteur 1 à une pompe de circulation 3, une conduite 4 transportant le liquide de la pompe à un radiateur 5 où il cède de la chaleur à l'atmosphère, et une conduite 6 ramenant le liquide du radiateur au moteur. Le liquide de refroidissement est habituellement une solution aqueuse d'un produit antigel,et le radiateur 5 est placé le plus souvent en avant du compartiment moteur, sous le capot avant du véhicule.

A ce circuit de refroidissement principal est relié un circuit de refroidissement auxiliaire selon l'invention, qui comprend essentiellement un ensemble 7 formé de trois échangeurs de chaleur primaires 8, 9 et 10, un échangeur de chaleur secondaire 11 et une pompe 12. Une conduite 13 amène le liquide de refroidissement d'un point 14 de la conduite 4 à la pompe 12, une conduite 15 transporte le liquide de cette dernière à l'échangeur 11, une conduite 16 transporte le liqide de l'échangeur 11 à l'ensemble 7, et une conduite 17 ramène le liquide de ce dernier à un point 18 de la conduite 6.

Dans l'échangeur de chaleur secondaire 11 ou sur-refroidisseur, qui est du même type que le radiateur 5 du circuit principal et disposé au voisinage de celui-ci à l'avant du véhicule, le liquide de refroidissement cède de la chaleur à l'atmosphère. Les échangeurs de chaleur primaires 8, 9 et 10 servent respectivement au refroidissement de l'huile de moteur et/ou de boîte de vitesse du véhicule, de l'air de suralimentation sortant d'un turbocompresseur et d'un fluide de climatisation tel qu'un fréon à l'état gazeux. L'échangeur à fréon 10 abaisse la température du fréon gazeux à une valeur convenable pour que celui-ci se condense, en cédant de la chaleur à l'air atmosphérique, dans un condenseur 19 disposé, comme le radiateur 4 et le sur-refroidisseur 11, à l'avant du véhicule. Le fréon condensé est ensuite envoyé dans un ensemble 20 comprenant notamment un évaporateur et un compresseur, d'où il retourne, sous forme de vapeur surchauffée, dans l'échangeur 10 ou désurchauffeur. L'ensemble 20 appartient à une installation de climatisation du véhicule.

Les échangeurs primaires 8 à 10 peuvent être logés en un endroit quelconque du véhicule, et peuvent être montés en série et/ou en parallèle au sein de l'ensemble 7. Dans le cas où deux au moins des échangeurs primaires sont en série, il est préférable que l'échangeur à air soit en amont de l'échangeur à huile, et/ou que l'échangeur à fréon soit en amont de l'échangeur à air et/ou de l'échangeur à huile.

Tous les éléments du circuit auxiliaire sont connus en eux-mêmes, à l'exception du désurchauffeur 10, qui peut être d'une conception identique à celle du refroidisseur d'air de suralimentation 9, mais adapté aux pressions de l'ordre de 18 à 20 bars qui règnent dans le circuit de fréon. La pompe 12 est de faible puissance, inférieure à 50 watts. Le sur-refroidisseur 11 abaisse la température du liquide de refroidissement de 95°C environ, température de sortie du moteur, à 60°C environ, température convenable à l'entrée du désurchauffeur 10.

Le tableau 1 donne à titre d'exemple les puissances thermiques reçues par les fluides primaires associés aux échangeurs de chaleur primaires 8 à 10 dans différentes conditions de fonctionnement d'un véhicule donné.

## Tableau 1

| P évacuée kW | MONTAGNE | | PLAT | | PAYS CHAUD | |
|---|---|---|---|---|---|---|
| | 25°C 50 km/h | 25°C 90 km/h | 35°C 130 km/h | 35°C 175 km/h | 45°C RALENTI | 45°C 130 km/h |
| EAU | 45,9 | 56,5 | 35,2 | 70,8 | 14,4 | 35,9 |
| AIR | 1,8 | 3,0 | 3,1 | 5,0 | 0 | 3,1 |
| FREON désurch /cond | 0 0/0 | 0 0/0 | 3,5 0,6/2,9 | 4,0 0,8/3,2 | 4,6 0,3/4,3 | 7,5 1,3/6,2 |
| HUILE | 3,0 | 5,2 | 3,2 | 4,7 | 0,1 | 3,2 |
| TOTAL AIR + FREON + HUILE | 4,8 | 8,2 | 9,8 | 13,7 | 4,7 | 13,8 |

Les différentes conditions d'utilisation, correspondant aux colonnes du tableau, sont les suivantes :

- parcours de montagne à une température ambiante de 25°C, à des vitesses de déplacement de 50 et 90 km/h;

- parcours sur terrain plat à une température ambiante de 35°C, à des vitesses de 130 et 175 km/h;

- utilisation en pays chaud à une température ambiante de 45°C, au ralenti et à 130 km/h.

3

On a également indiqué les puissances reçues par l'eau du circuit de refroidissement principal.

On voit que les valeurs maximales des puissances thermiques pour les trois fluides primaires sont atteintes pour des conditions de fonctionnement différentes du véhicule : 5 kilowatts en terrain plat à 175 km/h pour l'air, 7,5 kilowatts en pays chaud à 130 km/h pour le fréon et 5,2 kilowatts en montagne à 90 km/h pour l'huile. La somme de ces valeurs maximales est 17,7 kilowatts, alors que la valeur maximale de la puissance totale reçue par ces trois fluides est 13,8 kilowatts pour une vitesse de 130 km/h en pays chaud. La réunion des trois échangeurs primaires en un même circuit permet donc de réduire la capacité de l'échangeur secondaire par rapport à la somme des capacités qui seraient nécessaires dans des circuits séparés.

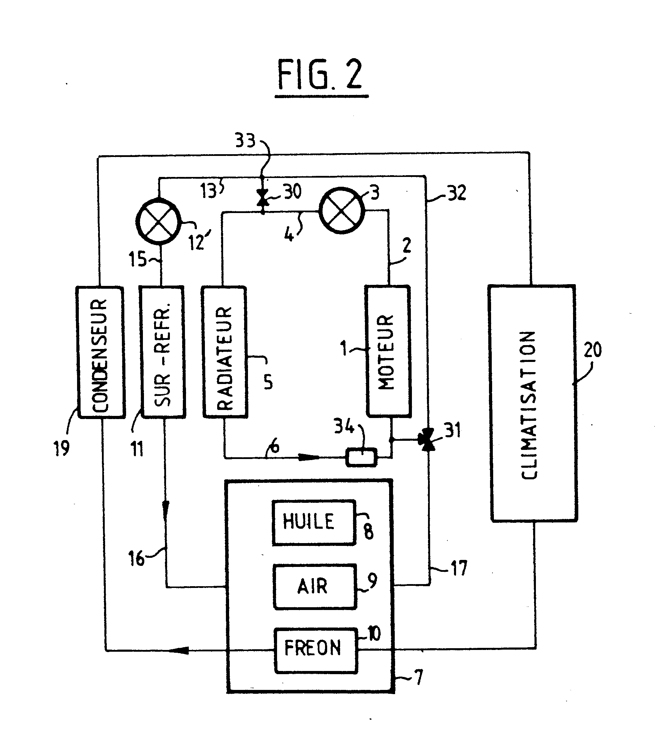

L'installation schématisée à la figure 2 comprend de nombreux éléments communs avec celle de la figure 1, qui sont désignés par les mêmes signes de référence. Elle diffère essentiellement de celle-ci par l'interposition de deux vannes 30 et 31 respectivement sur les conduites 13 et 17 du circuit auxiliaire, et par l'adjonction d'une conduite 32 entre la vanne 31, qui est à trois voies, et un point de raccordement 33 de la conduite 13 en aval de la vanne 30. Un clapet antiretour 34 est placé sur la conduite 6 du circuit principal, et la pompe 12 du circuit auxiliaire est remplacée par une pompe 12' à basse pression et débit élevé d'une puissance comprise entre 50 et 100 watts.

La vanne à trois voies 31 peut être commandée de façon à envoyer le liquide de refroidissement secondaire sortant de l'ensemble d'échangeurs primaires 7 vers le moteur 1 du véhicule et/ou vers la pompe 12' par la conduite 32. Lorsque la sortie de la vanne 31 vers la conduite 32 est fermée, on retrouve la structure du circuit de la figure 1. Lorsque la sortie de cette vanne vers le moteur est fermée et que la vanne 30 est également fermée, on obtient un circuit auxiliaire indépendant du circuit principal. Dans ce dernier cas, le liquide de refroidissement arrivant au sur-refroidisseur est à une température d'environ 70°C au lieu de 95°C environ dans le cas du circuit de la figure 1. La vanne 31 peut être commandée en tout ou rien ou de façon progressive. La liaison qu'elle permet entre les deux circuits sert notamment à faire participer le sur-refroidisseur 11 au refroidissement du moteur 1 au ralenti ou à l'arrêt du moteur.

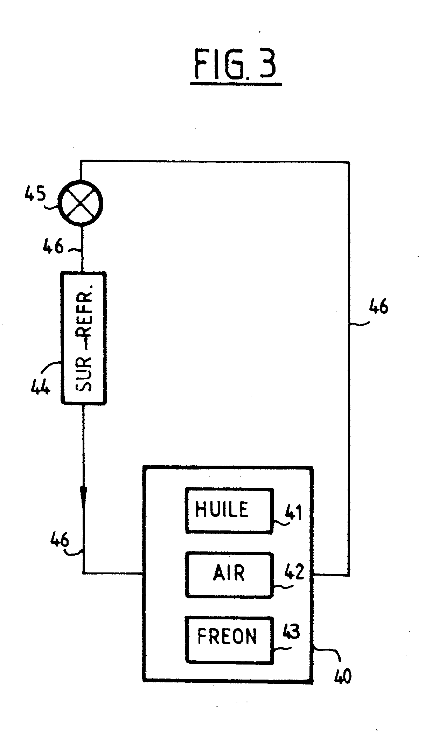

La figure 3 illustre un circuit de refroidissement selon l'invention, entièrement indépendant du circuit de refroidissement principal éventuel du moteur du véhicule. Ce circuit comprend un ensemble 40 formé de trois échangeurs de chaleur primaires 41, 42 et 43 servant respectivement au refroidissement de l'huile du moteur et/ou de la boîte de vitesse, de l'air de suralimentation et du fréon de l'installation de climatisation. Cet ensemble 40 est relié à un sur-refroidisseur 44 et à une pompe de circulation 45 par des conduites 46. La structure de ce circuit est semblable à celle du circuit auxiliaire de la figure 2 tel qu'il se présente lorsque les vannes 30 et 31 l'isolent du circuit principal.

Le fluide de refroidissement secondaire fonctionne ici entre l'état liquide et l'état gazeux. C'est par exemple un mélange eau/antigel. Il se vaporise dans les échangeurs primaires 41 à 43 et se condense dans le sur-refroidisseur 44 qui est donc un condenseur. La chaleur de vaporisation élevée du fluide permet un échange de chaleur avec le fréon de l'installation de climatisation plus intense que dans le cas des circuits des figures 1 et 2 qui mettent en jeu seulement la chaleur spécifique du fluide de refroidissement. L'échangeur primaire 43 est un condenseur et assure à lui seul le refroidissement du fréon de climatisation.

Comme dans les circuits précédents, le sur-refroidisseur 44 est de préférence situé, avec le radiateur principal éventuel, à la partie avant du capot moteur du véhicule, l'ensemble d'échangeurs primaires 40 étant placé en un endroit quelconque de l'espace moteur.

Les indications données à propos de la figure 1 quant à la disposition relative des échangeurs primaires dans le circuit restent valables ici.

Les exemples décrits ci-dessus n'ont aucun caractère limitatif. En particulier, le nombre d'échangeurs de chaleur primaires peut être égal à deux ou supérieur à trois, ces échangeurs pouvant servir au refroidissement d'autres fluides que de l'huile de moteur et/ou de boîte de vitesse, de l'air de suralimentation et du fluide de climatisation, par exemple du fluide servant à la lubrification et/ou au refroidissement des paliers du turbo-compresseur.

Dans le circuit de la figure 2, les vannes commandées 30 et 31 peuvent être remplacées par des moyens de communication permettant le remplissage conjoint en fluide de refroidissement du circuit principal et du circuit auxiliaire lors de la construction du véhicule, et pouvant être fermés ensuite pour séparer définitivement les deux circuits. Dans ce cas, le clapet 34 est supprimé. Il est également possible de supprimer non seulement le clapet 34, mais également les vannes 30 et 31 et les parties de conduites qui les relient au circuit principal, pour obtenir un circuit auxiliaire indépendant dès l'origine du circuit principal et qui doit être rempli indépendamment de celui-ci d'un fluide de refroidissement identique ou différent.

## Revendications

1. Circuit de refroidissement pour véhicule automobile comprenant au moins un premier échangeur de chaleur primaire (8, 9, 10) pour transférer de la chaleur d'un premier fluide primaire, qui reçoit une puissance thermique variant en fonction des conditions de fonctionnement du véhicule, à un fluide secondaire, un échangeur de chaleur secondaire (11) pour transférer de la chaleur du fluide secondaire à l'atmosphère, et des moyens de circulation (12) pour faire circuler le fluide secondaire entre le premier échangeur primaire et l'échangeur secondaire, caractérisé en ce qu'il comprend en outre au moins un second échangeur de chaleur primaire (8, 9, 10) pour transférer de la chaleur d'un second fluide primaire, qui reçoit une puissance thermique variant en fonction des conditions de fonctionnement du véhicule, au fluide secondaire, les moyens de circulation faisant également circuler le fluide secondaire entre le second échangeur primaire et l'échangeur secondaire, les valeurs maximales respectives des puissances thermiques reçues par les premier et second fluides primaires étant atteintes pour des conditions de fonctionnement différentes.

2. Circuit selon la revendication 1, caractérisé en ce qu'il comprend au moins trois échangeurs primaires (8, 9, 10) associés chacun à un fluide primaire et reliés à l'échangeur secondaire par les moyens de circulation.

3. Circuit selon l'une des revendications 1 et 2, caractérisé en ce que la capacité d'échange thermique de l'échangeur secondaire est calculée pour évacuer une puissance thermique inférieure à la somme des puissances maximales reçues par les fluides primaires associés à l'ensemble des échangeurs primaires du circuit.

4. Circuit selon l'une des revendications précédentes, caractérisé en ce que les moyens de circulation comprennent une pompe (12).

5. Circuit selon l'une des revendications précédentes, caractérisé en ce que le fluide secondaire est un liquide.

6. Circuit selon la revendication 4 et la revendication 5, caractérisé en ce qu'il est relié au circuit principal (2-6) de refroidissement du moteur d'entraînement (1) du véhicule et utilise comme liquide secondaire le liquide de refroidissement du circuit principal, la pompe (12), l'échangeur secondaire (11) et les échangeurs primaires (8, 9, 10) étant montés en parallèle avec le radiateur du circuit principal.

7. Circuit selon la revendication 6, caractérisé en ce que la liaison au circuit principal est réalisée à travers des vannes commandées (30, 31), et en ce qu'il comporte une branche directe (32) entre la sortie des échangeurs primaires et l'entrée de la pompe.

8. Circuit selon la revendication 7, caractérisé en ce que les vannes commandées (30, 31) permettent de faire circuler le liquide de refroidissement du moteur dans le sur-refroidisseur pour améliorer le refroidissement du moteur au ralenti ou à l'arrêt.

9. Circuit selon la revendication 5, caractérisé en ce qu'il est relié au circuit principal de refroidissement du moteur par des moyens de communication permettant un remplissage conjoint des deux circuits en liquide de refroidissement lors de la construction du véhicule, et pouvant être fermés ensuite pour séparer définitivement les deux circuits.

10. Circuit selon l'une des revendications 5 à 9, caractérisé en ce que l'un des échangeurs primaires est un désurchauffeur (10) destiné à abaisser la tenpérature de la vapeur d'un fluide primaire circulant dans une installation de climatisation (20) avant qu'elle passe dans un condenseur (19).

11. Circuit selon l'une des revendications 1 à 4, caractérisé en ce que le fluide secondaire passe de l'état liquide à l'état gazeux dans l'échangeur primaire (41, 42, 43) et de l'état gazeux à l'état liquide dans l'échangeur secondaire (44).

12. Circuit selon l'une des revendications précédentes, caractérisé en ce qu'il comprend au moins deux échangeurs primaires branchés en série, ou au moins trois échangeurs primaires en combinaison série-parallèle, un échangeur à air étant en amont d'un échangeur à huile, et/ou un échangeur à fréon étant en amont d'un échangeur à air et/ou d'un échangeur à huile.

0283340

# FIG. 1

## FIG. 2

# FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 752 132 (CATERPILLAR) <br> * Colonne 1, ligne 29 - colonne 4, ligne 27; figures 1-4 * | 1,3-6 | F 01 P 3/20 <br> F 25 B 49/00 |
| Y | | 2,7,10, 11 | |
| A | | 9 | |
| | --- | | |
| Y | US-A-4 535 729 (DEERE) <br> * Colonne 1, ligne 61 - colonne 2, ligne 63 * | 2,10 | |
| | --- | | |
| Y | FR-A-1 497 832 (DAIMLER-BENZ) <br> * Page 1, colonne de gauche - page 5, colonne de droite; figures 1,2 * | 7 | |
| A | | 1,3,8 | |
| | --- | | |
| Y | US-A-4 311 498 (BORG-WARNER) <br> * Colonne 3, lignes 27-41; figures * | 10 | |
| | --- | | |
| Y | US-A-2 318 834 (BIRKIGT) <br> * Page 1, colonne de droite, ligne 4 - page 2, colonne de gauche, ligne 42; figures * | 11 | DOMAINES TECHNIQUES RECHERCHES (Int. Cl.4) |
| A | | 12 | F 01 P |
| | --- | | |
| A | US-A-2 932 156 (DAIMLER-BENZ) | | |
| | --- | | |
| X | FR-A-1 441 893 (VOITH-GETRIEBE) <br> * Pages 1-4; figures * | 1,3-5 | |
| | --- | | |
| A | US-A-4 362 131 (GARRETT) | | |
| | --- | | |
| A | FR-A-2 088 923 (SAVIEM) <br> ---        -/- | | |

Le présent rapport a été établi pour toutes les revendications

| Lieu de la recherche | Date d'achèvement de la recherche | Examinateur |
|---|---|---|
| LA HAYE | 26-05-1988 | KOOIJMAN F.G.M. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 507 487 (DAIMLER-BENZ) ----- | | |

**DOMAINES TECHNIQUES RECHERCHES (Int. Cl.4)**

Le présent rapport a été établi pour toutes les revendications

| Lieu de la recherche | Date d'achèvement de la recherche | Examinateur |
|---|---|---|
| LA HAYE | 26-05-1988 | KOOIJMAN F.G.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)